# EUROPÄISCHE PATENTSCHRIFT

(11) **EP 1 284 447 B1**
(45) Veröffentlichungstag und Bekanntmachung des Hinweises auf die Patenterteilung: **21.11.2007**
(21) Anmeldenummer: 02015989.3
(22) Anmeldetag: 18.07.2002
(51) Int. Cl.: G05G 5/18, B60N 2/235

(54) **Schwenkbeschlag**
Pivotal fitting
Ferrure pivotante

(30) Priorität: 13.08.2001 DE 20112976 U
(43) Veröffentlichungstag der Anmeldung: 19.02.2003
(73) Patentinhaber: Hettich Franke GmbH & Co. KG, 72336 Balingen (DE)
(72) Erfinder: Sauter, Karl-Jürgen, 72469 Messstetten (DE)
(74) Vertreter: Dantz, Jan Henning

(56) Entgegenhaltungen:
- BE-A- 797 955
- DE-C- 19 904 299
- GB-A- 2 023 710

## Beschreibung

Die vorliegende Erfindung betrifft einen Schwenkbeschlag mit einer ersten Lasche und einer zweiten Lasche, die um eine gemeinsame Achse schwenkbar miteinander verbunden sind und mit einem zwischen den beiden Laschen liegenden Gesperre, welches einen innenverzahnten Zahnring und mindestens eine pendelnd gelagerte Sperrklinke aufweist, wobei die Sperrklinke aus einer Grundstellung des Schwenkbeschlages heraus über einen bestimmten Schwenkwinkel der Laschen hinweg ständig mit der Innenverzahnung des Zahnringes in Kontakt gehalten ist und dadurch jede in diesem Schwenkbereich eingenommene Position der Laschen zueinander abgestützt und nach Überfahren dieses Schwenkbereiches außer Eingriff mit der Verzahnung gebracht wird, so daß ein behinderungsfreies Zurückschwenken der Laschen in die Grundstellung zurück möglich ist.

Schwenkbeschläge der gattungsgemäßen Art sind an sich bekannt.

Grundsätzlich sind Schwenkbeschläge mit Gesperren in unterschiedlichen Ausführungsformen bekannt (siehe z.B. GB-A-2023710).

Einerseits gibt es Schwenkbeschläge, bei denen Gesperre verwendet werden, die mit in Richtung der Schwenkachse sich erstreckenden Rastmitteln arbeiten.

Darüber hinaus gibt es Schwenkbeschläge der gattungsgemäßen Art, bei denen die Gesperre radial zur Schwenkachse wirken.

Grundsätzlich sind bei allen Schwenkbeschlägen der besprochenen Art bislang viele Einzelteile erforderlich, woraus eine teure Herstellung resultiert und häufig sind derartige Schwenkbeschläge auch sehr störanfällig und gering belastbar. Bei vielen Schwenkbeschlägen ist auch eine erhöhte Verletzungsgefahr durch die Gesperre zu konstatieren, das heißt, es besteht die Möglichkeit des Einklemmens von Fingern oder anderen Körperteilen, unabhängig hiervon können aber auch je nach Anwendungsfall - beispielsweise bei Polstermöbeln - Bezugstoffe oder dergleichen eingeklemmt und zerstört werden.

Der vorliegenden Erfindung liegt die Aufgabe zugrunde, einen Schwenkbeschlag der gattungsgemäßen Art zu schaffen, der preiswert herstellbar, hoch belastbar und störunanfällig ist.

Diese Aufgabe wird erfindungsgemäß durch die Merkmale des kennzeichnenden Teils von Anspruch 1 gelöst.

Ein derartiger Schwenkbeschlag ist aus wenigen, letztendlich unkomplizierten und somit insgesamt preiswert herstellbaren Bauteilen aufgebaut und bietet insofern bezüglich seiner Fertigung einen beträchtlichen wirtschaftlichen Vorteil.

Außerdem liegen alle gesperrewirksamen Bauteile verdeckt eingebaut zwischen den beiden Laschen, so dass der Schwenkbeschlag insgesamt störunanfällig ist und auch die Verletzungsgefahr durch unsachgemäße Handhabung praktisch beseitigt ist.

Die Belastbarkeit eines erfindungsgemäßen Schwenkbeschlages ist vergleichsweise hoch, da durch die radial zur Schwenkachse wirkenden Gesperrteile (innenverzahnter Zahnring einerseits und damit zusammen wirkende Sperrklinke oder Sperrklinken andererseits) im abgestützten Zustand ein Formschluß gegeben ist, der die Gefahr des Überfahrens dieser Sperreinrichtung verhindert.

Die für die Gesperrewirkung erforderlichen Bauteile sind weitestgehend zwischen den beiden Laschen gekapselt, so dass eine Verschmutzung des Rastmechanismus weitestgehend verhindert ist. Staub- und Stofffussel können nicht eindringen. Andererseits lässt die Kapselung eine maßvolle Schmierung zu, die Abrieb vermeidet, die Beweglichkeit des Gelenkes und die Funktionssicherheit erhöht und insgesamt die Lebensdauer des Beschlages verlängert.

Weitere Merkmale der Erfindung sind Gegenstand von Unteransprüchen.

In beigefügten Zeichnungen sind Ausführungsbeispiele der Erfindung dargestellt, die im folgenden näher beschrieben werden. Es zeigen :
- Figur 1: eine perspektivische Sprengbilddarstellung eines erfindungsgemäßen Schwenkbeschlages
- Figur 2: eine Teildraufsicht auf den Gelenkbereich des Schwenkbeschlages gemäß Figur 1 im montierten Zustand
- Figur 3: eine Ansicht in Richtung des Pfeiles III in Figur 2
- Figur 4: einen Schnitt nach der Linie IV/IV in Figur 3
- Figur 5: eine Teildraufsicht auf den Gelenkbereich eines Schwenkbeschlages nach einem weiteren Ausführungsbeispiel der Erfindung
- Figur 6: einen Schnitt nach der Linie VI/VI in Figur 5
- Figur 7: eine Ansicht in Richtung des Pfeiles VII in Figur 5
- Figur 8: eine perspektivische Darstellung einer Lasche des Schwenkbeschlages gemäß den Figuren 5 - 7
- Figur 9: eine Ansicht einer Sperrklinke eines erfindungsgemäßen Schwenkbeschlages
- Figur 10: einen Schnitt nach der Linie X/X in Figur 9
- Figuren 11a - 13b: Schnittdarstellungen durch den Gelenkbereich in verschiedenen Höhenlagen bei verschiedenen Verschwenkpositionen eines erfindungsgemäßen Schwenkbeschlages
- Figur 14: eine Draufsicht auf eine Steuerscheibe eines Schwenkbeschlages nach nicht erfindungsgemäßen weiteren Ausführungsbeispiel mit zwei durch diese Steuerscheibe gesteuerten Sperrklinken
- Figur 15: einen Schnitt nach der Linie XV/XV in Figur 14
- Figur 16: einen Schnitt nach der Linie XVI/XVI in Figur 14

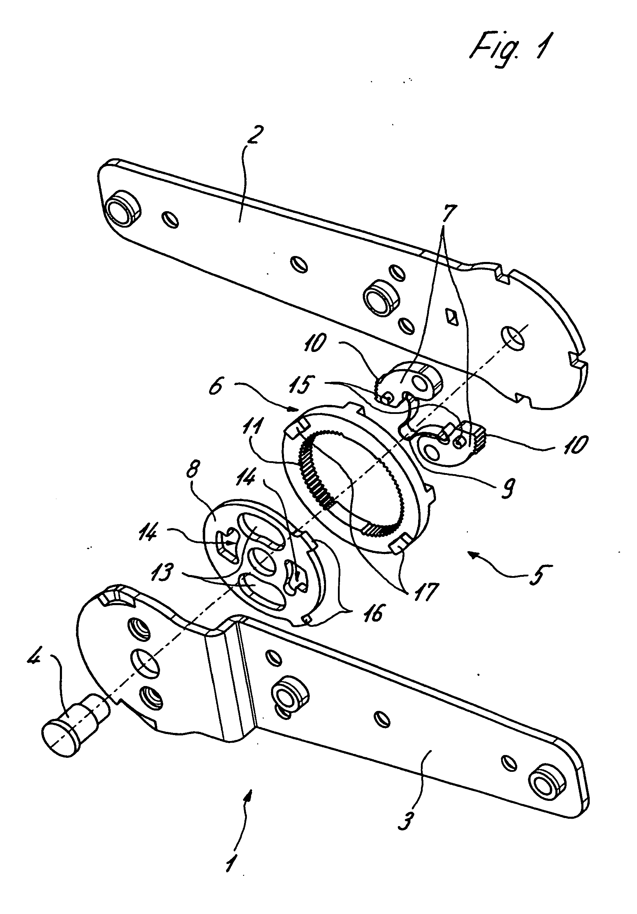

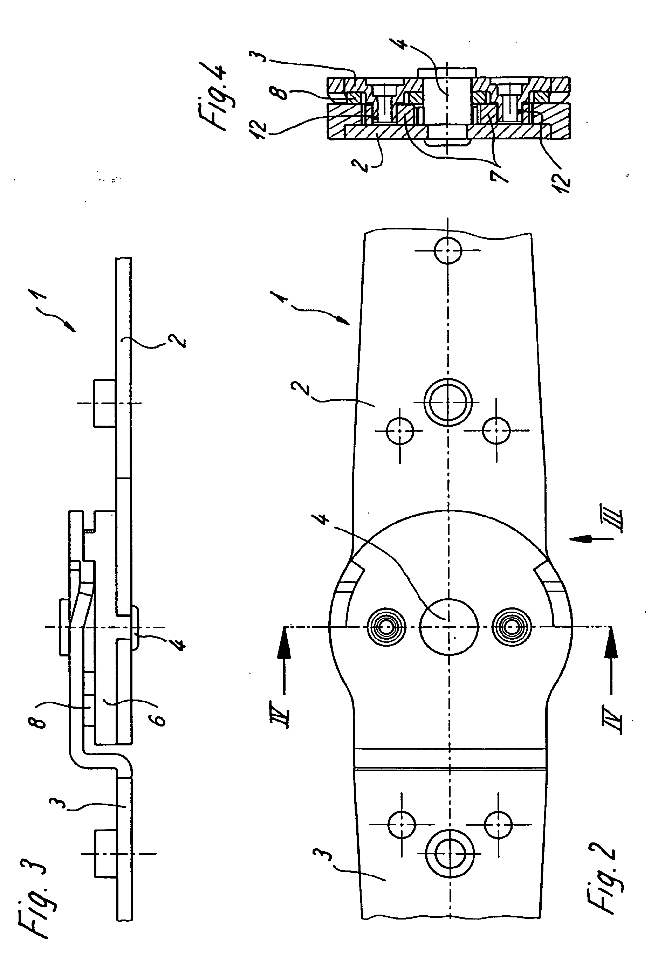

Der in den Figuren 1 und 2 dargestellte und insgesamt mit dem Bezugszeichen 1 bezeichnete Schwenkbeschlag weist eine erste Lasche 2 sowie eine zweite Lasche 3 auf, die um eine gemeinsame Achse 4 gegeneinander verschwenkbar sind. Über die Achse 4 sind auch die beiden Laschen 2 und 3 im montierten Zustand in axialer Richtung miteinander verbunden.

Die Laschen 2und 3 können- je nach Verwendungszweck - unterschiedlich gestaltet sein und mit Befestigungs- und/oder Fixierungsmittlen (Zapfen, Bohrungen, Nasen, tiefgezogenen Ansätzen usw.) versehen sein.

Zwischen den beiden Laschen 2 und 3 ist ein insgesamt mit dem Bezugszeichen 5 versehenes Gesperre angeordnet, welches es ermöglicht die beiden Laschen 2 und 3 aus einer Grundstellung heraus - beispielsweise aus einer Strecklage der beiden Laschen 2 und 3 zueinander - bis zu einer Endstellung zu verschwenken und jede der möglichen Zwischenstellungen unter Belastung abzustützen.

Dieses Gesperre 5 umfaßt einen innenverzahnten Zahnring 6, zwei Sperrklinken 7 und eine Steuerscheibe 8.

Der Zahnring 6 ist beim Ausführungsbeispiel nach den Figuren 1 - 4 als separates Bauteil hergestellt und fest, zumindest aber verdrehsicher, mit der ersten Lasche 2 verbunden und in soweit Bestandteil dieser ersten Lasche 2.

Die Sperrklinken 7, die unter der Belastung einer gemeinsamen Feder 9 stehen, sind an der zweiten Lasche 3 schwenkbar, beziehungsweise pendelnd gelagert.

Durch die Wirkung der Feder 9 werden die beiden Sperrklinken 7 ständig in Richtung des Zahnringes 6 belastet, so dass die mit einem oder mehreren Zähnen 10 versehenen freien Enden der Sperrklinken 7 über den Wirkbereich des gesamten Gesperres 5 hinweg mit der Innenverzahnung 11 des Zahnringes 6 in Eingriff stehen.

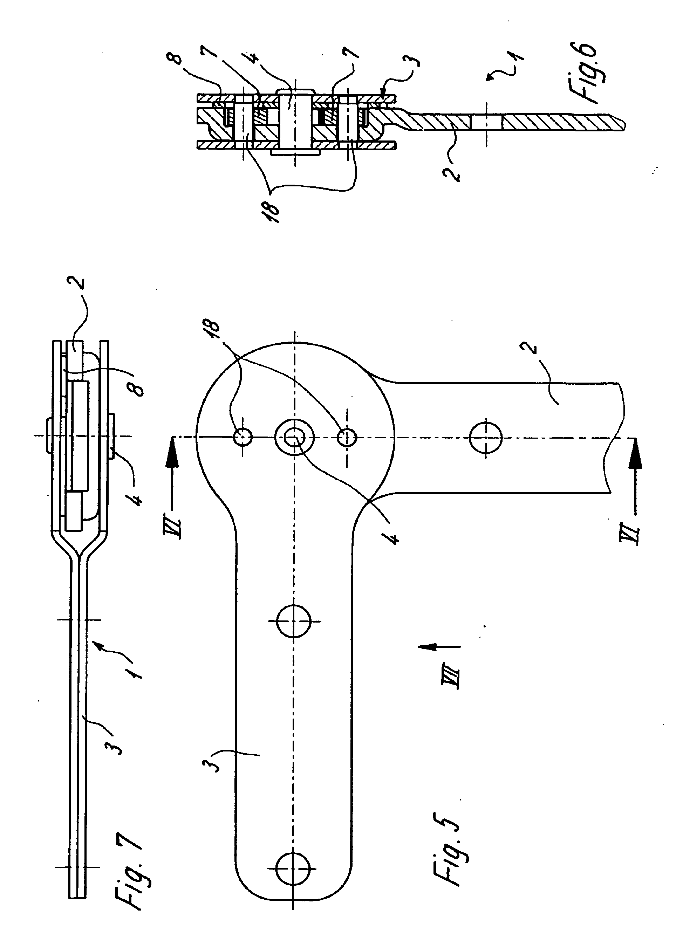

Die Lagerung der Sperrklinken 7 erfolgt, was Figur 4 besonders deutlich zeigt, auf Lagerzapfen 12, welche auf stanztechnischem Wege als gestufte Durchzüge der Lasche 3 gebildet sind. Selbstverständlich sind wie auch hier andere Lagerungsarten möglich.

Die Lagerzapfen 12 durchtreten die zwischen dem Zahnring 6 und der Lasche 3 liegende Steuerscheibe 8 im Bereich von Langlöchern 13. Dadurch kann sich die Steuerscheibe 8 unbehindert von den Lagerzapfen 12 für die Sperrklinken 7 in gewissen Grenzen verschwenken lassen.
Die Steuerscheibe 8 ist mit Durchbrechungen 14 versehen, in die Steuernocken 15 der Sperrklinken 7 hineinragen.

An ihrem äußeren Umfang ist die Steuerscheibe 8 mit radial vorspringenden Anschlagnasen 16 ausgestattet. Diesen Anschlagnasen 16 zugeordnet sind Mitnehmernasen 17 des Zahnringes 6, die axial über den Zahnring 6 hinaus in Richtung der Steuerscheibe 8 vorstehen.

Die Durchbrechungen 14 der Steuerscheibe 8, in welche die Steuernocken 15 hineinragen, sind formmäßig so gestaltet, dass die Sperrklinken 7 über einen weiten Verschwenkbereich der beiden Laschen 2 und 3 zueinander frei beweglich sind, so dass die Zähne 10 der besagten Sperrklinken 7 ständig im Eingriff mit der Innenverzahnung 11 des Zahnringes 6 sind.

Erst bei Erreichen der vorgegebenen maximalen Verschwenkung der beiden Laschen 2 und 3 relativ zueinander werden die Sperrklinken 7 außer Eingriff mit der Innenverzahnung 11 des Zahnringes 6 gebracht und die Steuernocken 10 sind dann in einen verengten Bereich der Durchbrechungen 14 gebracht, so dass nunmehr die Sperrklinken 7 in der ausgerückten Stellung über die Innenverzahnung 11 des Zahnringes 6 hinweg bewegt werden können, ohne dass es hierbei zu einem Eingriff kommt.

Die einzelnen Bewegungsabläufe werden weiter unten noch ausführlich beschrieben.

Die Verschwenkbarkeit der Steuerscheibe 8 wird durch das Zusammenwirken der Anschlagnasen 16 der Steuerscheibe 8 einerseits und der Mitnehmernasen 17 des Zahnringes 6 andererseits bestimmt.

Die Figuren 5 - 8 zeigen ein weiteres Ausführungsbeispiel der Erfindung, dessen ebenfalls noch zu beschreibende Funktionsweise identisch ist mit der Funktion des Ausführungsbeispiels nach den Figuren 1 - 4.

Lediglich der Aufbau des Schwenkbeschlages 1 ist hier etwas anders gewählt als bei Ausführungsbeispiel nach den Figuren 1 - 4.

So ist z.B. die mit dem Bezugszeichen 2 versehene Lasche auf stanztechnischem Wege mit einem einstückig angeformten Zahnring 6 mit einer Innenverzahnung 11 ausgestattet. Die mit dem Bezugszeichen 3 bezeichnete Lasche besteht aus zwei im Gelenkbereich gekröpften, fest miteinander verbundenen Laschen, wobei durch die Kröpfung der beiden Einzel-Laschen im Gelenkbereich eine gabelartige Aufnahme für die mit dem Bezugszeichen 2 versehene Lasche gebildet ist. In dieser gabelförmigen Aufnahme befindet sich sowohl der innenverzahnte Bereich der Lasche 2 wie auch eine Steuerscheibe 8 zur Steuerung der beiden Sperrklinken 7. Bei entsprechender Dimensionierung ist es allerdings auch denkbar, die Lasche 2 mit integriertem Zahnring 6 einstückig als Metall-Druckgussteil herzustellen.

Die Lagerung der Sperrklinken 7 erfolgt in diesem Falle auf Verbindungsnieten 18, mittels derer die beiden die Lasche 3 bildenden Stanzteile im gabelartigen Aufnahmebereich miteinander verbunden sind.

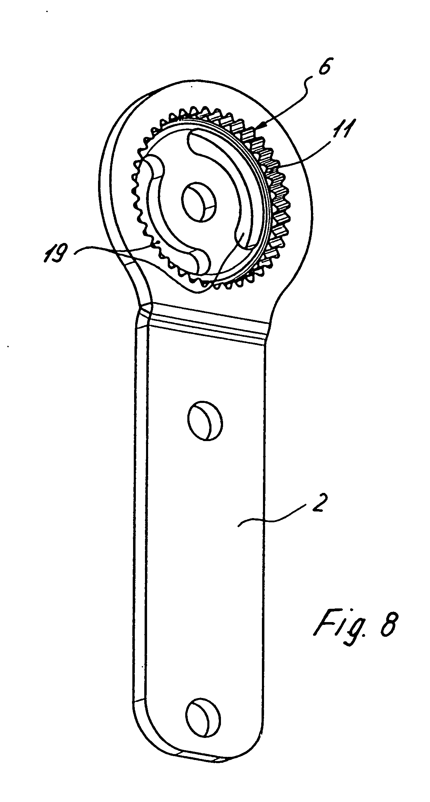

Die mit der Innenverzahnung 11 ausgestattete Lasche 2 ist, was Figur 8 deutlich zeigt, mit kreisbogenartig verlaufenden Langlöchern 19 versehen, durch welche die Verbindungsnieten 18 hindurchtreten, so dass ein behinderungsfreies Verschwenken der beiden Laschen 2 und 3 zueinander möglich ist.

Die Langlöcher 19 können im Zusammenwirken mit den Lagerzapfen 12 bzw. den Verbindungsnieten 18 auch die Funktion von Endanschlägen übernehmen, d.h. die Länge der Langlöcher 19 kann den Schwenkwinkel des Beschlages bestimmen.

Auch bei diesem Ausführungsbeispiel werden die Wirkpositionen der Sperrklinken 7 über die Steuerscheibe 8 gesteuert und beide Sperrklinken 7 werden entsprechen den weiter oben beschriebenen Ausführungsbeispielen über eine Feder in Wirkstellung belastet.

An dieser Stelle sei darauf aufmerksam gemacht, dass die Belastung der Sperrklinken 7 in Richtung der Innenverzahnung 11 auch durch andere Mittel als durch eine gemeinsame Feder 9 erfolgen kann.

Beispielsweise können die Sperrklinken 7 aus einem magnetischen Material gefertigt und durch Magnetkräfte in Richtung der Innenverzahnung 11 belastet sein.

Bei der Verwendung nur einer Sperrklinke, was prinzipiell auch möglich ist, kann diese ggfs. auch aufgrund ihrer Schwerkraft ständig in Eingriffsrichtung belastet sein.

Die beiden bisher beschriebenen Ausführungsbeispiele ermöglichen es, bei Bedarf auf einfache Art und Weise eine Änderung der Raststufung im Sinne von fein- oder grobstufiger herbeizuführen, im Falle des Ausführungsbeispieles nach den Figuren 1 und 4 durch Austauschen des separat gefertigten Zahnringes 6 und beim Ausführungsbeispiel gemäß den Figuren 6 - 8 durch Austauschen der mit der Innenverzahnung 11 ausgestatteten Lasche 2.

Auch die maximalen Verstell- oder Schwenkwinkel können durch Austausch der Steuerscheiben 8 variiert werden, so dass insgesamt mit vergleichsweise wenigen Einzelteilen ein umfangreiches Baukastensystem geschaffen werden kann.

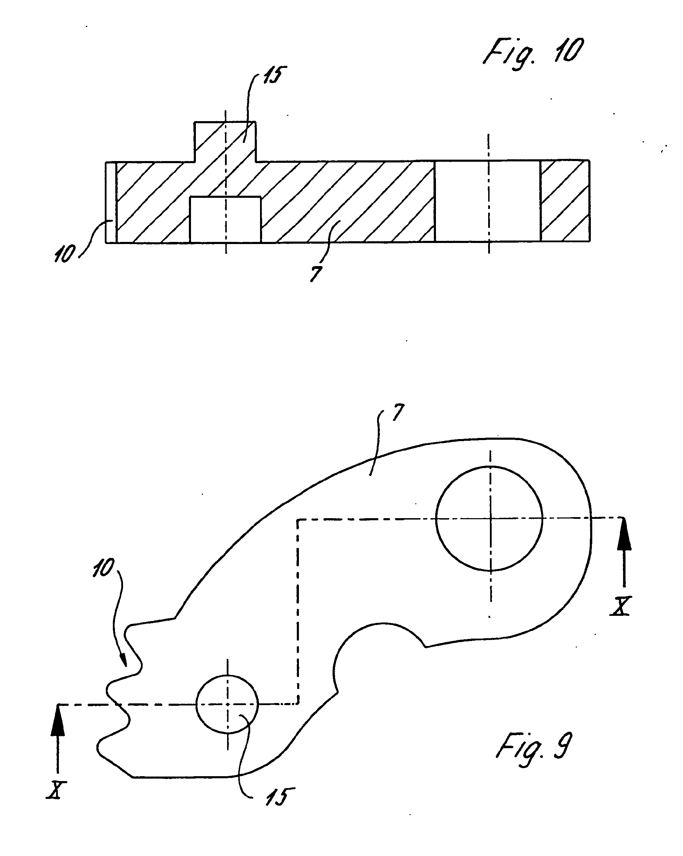

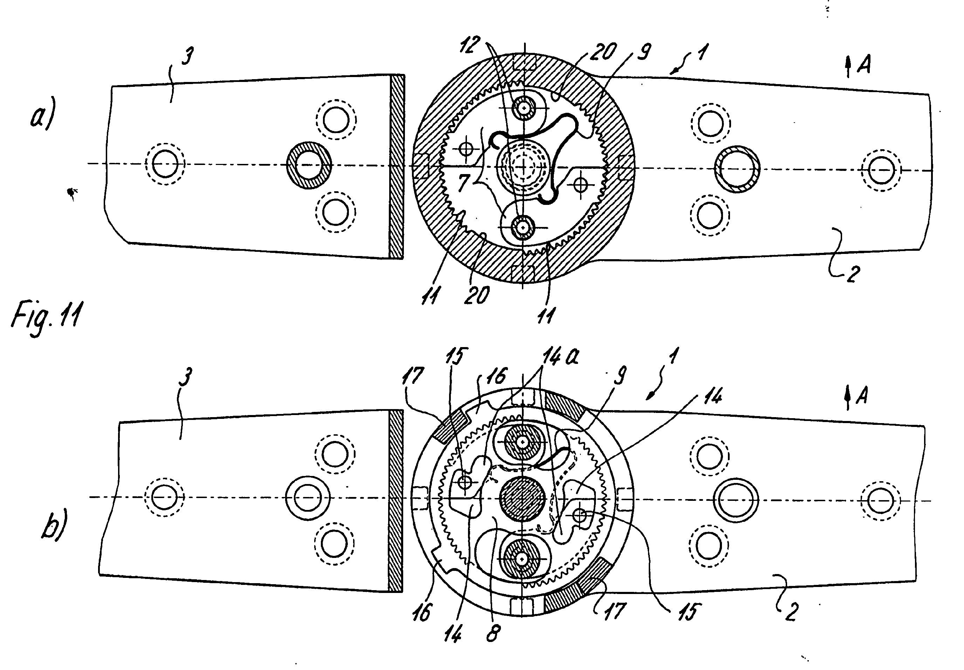

In den Figuren 9 und 10 ist eine Sperrklinke 7 als Einzelteil dargestellt, wobei die Figuren 9 und 10 deutlich machen, dass die Sperrklinke 7 mit ihren Zähnen 10 auf einfache Art und Weise stanztechnisch hergestellt werden kann, dies gilt insbesondere für den jeweiligen Steuernocken 15, der aus dem Material der Sperrklinke 7 im übrigen heraus ausgestanzt sein kann.

Je nach Anwendungsfall kann die Anzahl der Zähne 10 der Sperrklinke 7 verändert werden. Dabei gilt grundsätzlich, dass die Belastbarkeit des gesamten Gesperres um so höher ist, je mehr Zähne 10 die einzelnen Sperrklinken 7 aufweisen.

Anhand der Figuren 11 a - 13b soll nun im folgenden der Funktionsablauf eines erfindungsgemäßen Schwenkbeschlages 1 beschrieben werden. Dieser Funktionsablauf ist, wie schon dargelegt wurde, unabhängig davon, ob ein Schwenkbeschlag nach dem Konstruktionsprinzip des zuerst beschriebenen Ausführungsbeispieles aufgebaut ist oder gemäß dem Ausführungsbeispiel nach den Figuren 5 - 8 konzipiert ist.

In den Figuren 11a - 13b ist in den mit dem Buchstaben "a" charakterisierten Figuren eine Schnittebene gewählt, die die Lage der Sperrklinken 7 deutlich macht, während in den mit dem Buchstaben "b" markierten Figuren eine Schnittebene gewählt wurde, die die jeweilige Position der Steuerscheibe 8 und der Steuernocken 5 erkennbar macht.

Ausgehend von den Figuren 11a und 11b, welche einen erfindungsgemäßen Schwenkbeschlag in einer Grundstellung zeigen, sei angenommen, dass die Lasche 2, welche mit der Innenverzahnung 11 ausgestattet ist, in Richtung des Pfeiles A verschwenkt werden kann. In der Grundstellung gemäß den Figuren 11a und 11b befinden sich die Sperrklinken 7 im Eingriff mit der Innenverzahnung 11, gesichert durch die Feder 9 oder durch andere, weiter oben schon beschriebene Mittel. Wird nun die Lasche 2 im Sinne des Pfeiles A verschwenkt, können die Zähne 10 der Sperrklinken 7 um ihre Lagerzapfen 12 pendelnd entgegen der Wirkung der Feder 9 über die Innenverzahnung 11 hinwegratschen, werden aber sofort wieder in Eingriff mit der besagten Innenverzahnung 11 gebracht, so dass bei einer Belastung der Lasche 2 entgegen der Schwenkrichtung A diese sofort hochwirksam abgestützt und gesichert wird.

Bei Überschreiten eines vorbestimmten Schwenkwinkels der Lasche 2 gegenüber der Lasche 3 werden die Sperrklinken 7 völlig außer Eingriff mit der Innenverzahnung 11 gebracht und dieser ausgerückten Stellung durch die Steuerscheibe 8 gehalten. In dieser ausgerückten Stellung kann dann die Lasche 2 behinderungsfrei wieder in ihre Ursprungslage oder Grundstellung gemäß den Figuren 11a und 11b zurückgeführt werden, so dass nun ein erneutes Verschwenken der Lasche 2 mit Abstützung in allen möglichen Zwischenpositionen wieder ausgeführt werden kann.

Die mit den Buchstaben "b" charakterisierten Figuren zeigen, wie sich bei diesen Schwenkzyklen die Steuerscheibe 8 in Zusammenspiel mit den Steuernocken 15 der Sperrklinken 7 verhält.

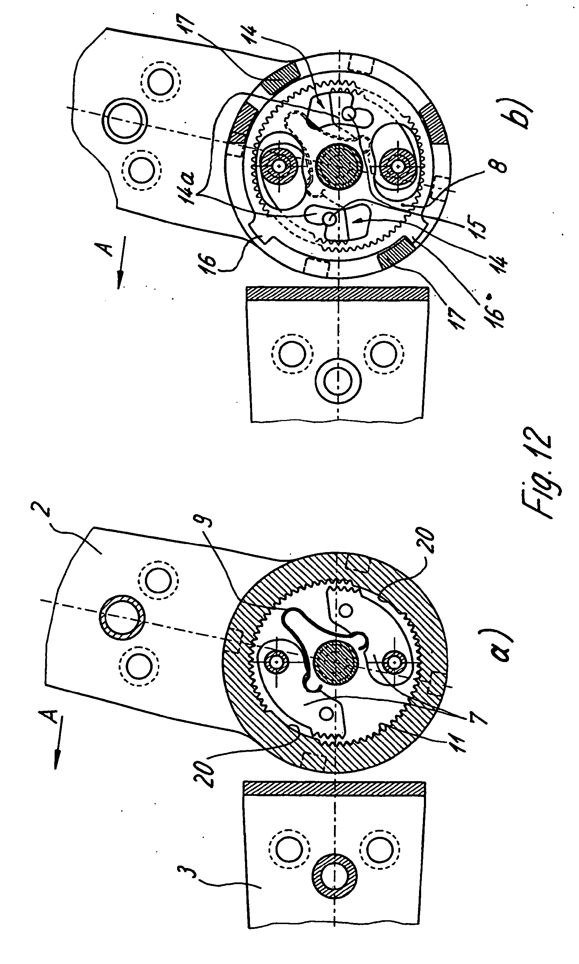

In der Grundstellung gemäß den Figuren 11a und 11b liegen die besagten Steuernocken 15 im flächenmäßig größeren Bereich der Durchbrechungen 14 der Steuerscheibe 8. In dieser Position können die Sperrklinken 7 frei pendeln und somit über die Innenverzahnung 11 hinwegratschen. Ist die Schwenkposition gemäß den Figuren 12a und 12b erreicht, liegen die Steuernocken 15 im Einführbereich zu dem verengten Abschnitt 14a der Durchbrechungen 14 innerhalb der Steuerscheibe 8.

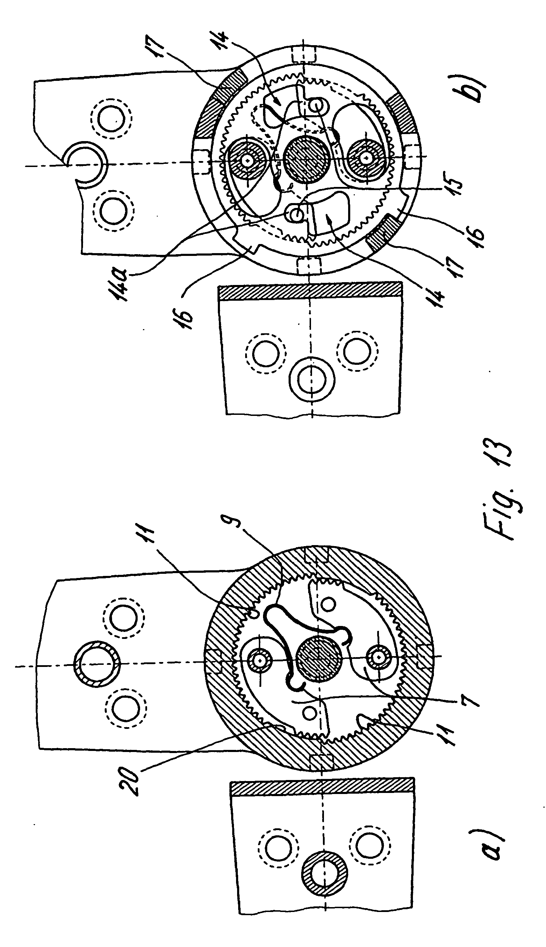

Ein weiteres Verschwenken der Lasche 2 in Richtung des Pfeiles A führt dazu, dass die Steuernocken 15 in diesem verengten Bereich 14a eingeführt werden, so dass nunmehr die Sperrklinken 7 in ihrer ausgerückten Position fixiert sind. Dies geht aus den Figuren 13a und 13b deutlich hervor. Nunmehr kann die Lasche 2 vollkommen behinderungsfrei in ihre Ausgangsposition gemäß den Figuren 11a und 11b zurückgeführt werden, wobei kurz vor Erreichen dieser Grundstellung die Steuerscheibe 8 über das Zusammenspiel der Anschlagnasen 16 mit den Mitnehmernasen 17 so verschwenkt wird, dass sich nunmehr die Steuernocken 15 der Sperrklinken 7 wieder im größeren Bereich der Durchbrechungen 14 der Steuerscheibe 8 befinden, wodurch ein freies Pendeln der Sperrklinken 7 ermöglicht wird. Nun kann ein neuer Schwenkzyklus - wie oben beschrieben - ausgeführt werden.

Die obigen Ausführungen machen in Verbindung mit den Zeichnungen deutlich, dass ein erfindungsgemäßer Schwenkbeschlag 1 letztlich aus wenigen, einfachen und preiswerten Einzelteilen besteht, eine einwandfrei sichere Funktion bietet und darüber hinaus eine hoch belastbare Abstützung der relativ zueinander verschwenkten Laschen 2 und 3 gewährleistet.

Es wurde schon erwähnt, dass ein erfindungsgemäßer Schwenkbeschlag 1 auch mit lediglich einer Sperrklinke auskommen kann; im Sinne einer hoch belastbaren Abstützung sind hingegen zwei Sperrklinken vorzuziehen. Bei Bedarf können sogar weitere Sperrklinken 7 Verwendung finden.

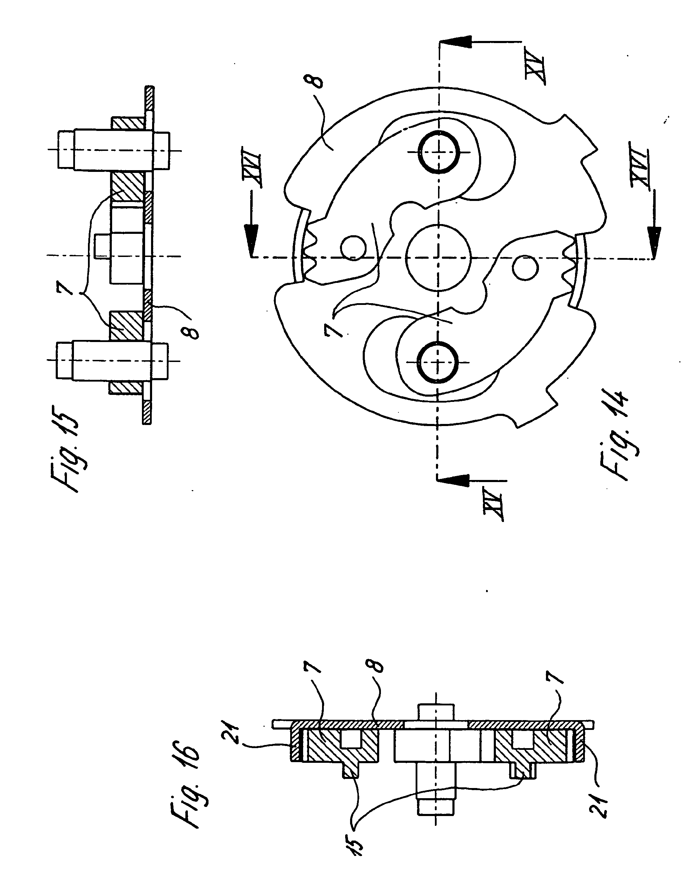

Die Figuren 14 bis 16 zeigen eine alternative Lösung zur Anhebung der Sperrklinken 7 aus dem Eingriff der Innenverzahnung 11 heraus, wie sie in den Ausführungsbeispielen gemäß den Figuren 1 bis 13 dargestellt ist. Es handelt sich jedoch nicht um eine erfindungsgemäße Anordnung, da die Steuernocken 15 nicht in Durchbrechungen der Steuerscheibe 8 hineinragen. Bei den Ausführungsbeispielen gemäß der Figuren 1 bis 13 ist innerhalb des Zahnringes ein unverzahnter Bereich 20 vorgesehen, der zu einem Anheben der Sperrklinken 7 führt.

Alternativ hierzu kann das Anheben der Sperrklinken 7 auch durch abgebogene Nasen 21 an der jeweiligen Steuerscheibe 8 erfolgen.

Insgesamt wird deutlich, dass vielfältige Ausführungsformen möglich sind, die aber alle auf dem gleichen, vorteilhaften Grundprinzip der beschriebenen Konstruktion basieren.

## Patentansprüche

1. Schwenkbeschlag (1) mit einer ersten Lasche (2) und einer zweiten Lasche (3), die um eine gemeinsame Achse (4) schwenkbar miteinander verbunden sind und mit einem zwischen den beiden Laschen (2, 3) liegenden Gesperre (5), welches einen innenverzahnten Zahnring (6) und mindestens eine pendelnd gelagerte Sperrklinke (7) aufweist, wobei die Sperrklinke (7) aus einer Grundstellung des Schwenkbeschlages (1) heraus über einen bestimmten Schwenkwinkel der Laschen (2, 3) hinweg ständig mit der Innenverzahnung des Zahnringes (6) in Kontakt gehalten ist und dadurch jede in diesem Schwenkbereich eingenommene Position der Laschen (2, 3) zueinander abgestützt und nach Überfahren dieses Schwenkbereiches außer Eingriff mit der Verzahnung gebracht wird, so dass ein behinderungsfreies Zurückschwenken der Laschen (2, 3) in die Grundstellung zurück möglich ist, **dadurch gekennzeichnet, dass** der Zahnring (6) fester Bestandteil einer der beiden Laschen (2) ist und die Sperrklinke (7) oder die Sperrklinken (7) an der anderen Lasche (3) festgelegt ist bzw. sind und dass zum Ausrücken der Sperrklinke (7) oder der Sperrklinken (7) eine Steuerscheibe (8) vorgesehen ist und dass die Sperrklinke (7) bzw. die Sperrklinken (7) mit Steuernocken (15) ausgestattet sind, die in Durchbrechungen (14) der Steuerscheibe (8) hineinragen und bei Erreichen einer Schwenk-Endstellung in einem verengten Bereich (14a) der Durchbrechungen (14) liegen, so dass in dieser Position die ausgerückte Stellung der Sperrklinke (7) bzw. der Sperrklinken (7) fixiert ist.

2. Schwenkbeschlag nach Anspruch 1, **dadurch gekennzeichnet, dass** der Zahnring (6) als separates Bauteil ausgebildet und verdrehsicher mit der Lasche (2) verbunden ist.

3. Schwenkbeschlag nach Anspruch 1, **dadurch gekennzeichnet, dass** der Zahnring (6) in die Lasche (2) integriert ist, beispielsweise durch einen Stanzvorgang oder durch Metall-Druckgießen erzeugt.

4. Schwenkbeschlag nach einem der vorhergehenden Ansprüche, **dadurch gekennzeichnet, dass** die Sperrklinke (7) oder die Sperrklinken (7) durch eine Feder (9), durch Magnete, Schwerkraft oder dergleichen in Richtung der Innenverzahnung belastet ist bzw. sind.

5. Schwenkbeschlag nach einem der vorhergehenden Ansprüche, **dadurch gekennzeichnet, dass** die die Sperrklinke (7) oder die Sperrklinken (7) aufnehmende Lasche (3) aus zwei kopfseitig gekröpften und fest miteinander verbundenen Laschenteilen besteht, die im gekröpften Bereich durch Verbindungsmittel, z.B. zwei Verbindungsniete (18) miteinander verbunden sind.

6. Schwenkbeschlag nach Anspruch 5, **dadurch gekennzeichnet, dass** die Verbindungsniete (18) als Lagerbolzen für die Sperrklinken (7) dienen.

7. Schwenkbeschlag nach einem der vorhergehenden Ansprüche, **dadurch gekennzeichnet, dass** zum Ausrücken der Sperrklinken (7) aus dem Eingriffsbereich zur Innenverzahnung (11) im Bereich des Zahnringes (6) unverzahnte Abschnitte (20) vorgesehen sind.

8. Schwenkbeschlag nach einem der Ansprüche 1 bis 6, **dadurch gekennzeichnet, dass** zum Ausrücken der Sperrklinken (7) aus dem Eingriffsbereich zur Innenverzahnung (11) an der Steuerscheibe (8) abgebogene Nasen (21) vorgesehen sind.

9. Schwenkbeschlag nach einem der vorhergehenden Ansprüche, **dadurch gekennzeichnet, dass** der Schwenkwinkel der Steuerscheibe (8) durch radial über die Steuerscheibe (8) hinaus vorstehende Anschlagnasen (16) und hiermit zusammenwirkende Mitnehmernasen (17) am Zahnring (6) oder der Lasche (2) bestimmt ist.

10. Schwenkbeschlag nach einem der vorhergehenden Ansprüche, **dadurch gekennzeichnet, dass** die beiden Laschen (2, 3) durch einen die Schwenkachse (4) bildenden Verbindungsbolzen in Form eines Nietes, einer Schraube oder dergleichen miteinander verbunden sind.

11. Schwenkbeschlag nach einem der vorgehenden Ansprüche, **dadurch gekennzeichnet, dass** Langlöcher (19) in Verbindung mit Lagerzapfen (12) bzw. Verbindungsnieten (18) den Drehweg des Beschlages begrenzen.

## Claims

1. Pivoting fitting (1) having a first lug (2) and a second lug (3) which are connected to one another so as to pivot about a common axis (4), and having a locking mechanism (5) which lies between the two lugs (2, 3) and has an annular gear (6) with an internal toothing system and at least one locking pawl (7) which is mounted in a floating manner, the locking pawl (7) being held constantly in contact with the internal toothing system of the annular gear (6) from a basic position of the pivoting fitting (1) over a defined pivoting angle of the lugs (2, 3) and, as a result, each position of the lugs (2, 3) which is assumed in this pivoting range being supported with respect to one another and being moved out of engagement with the toothing system after the said pivoting range has been passed through, with the result that unimpeded pivoting back of the lugs (2, 3) into the basic position is possible, **characterized in that** the annular gear (6) is a fixed constituent part of one of the two lugs (2) and the locking pawl (7) or the locking pawls (7) is/are fixed on the other lug (3), and **in that** a disc cam (8) is provided for disengaging the locking pawl (7) or the locking pawls (7), and **in that** the locking pawl (7) or the locking pawls (7) is/are equipped with control cams (15) which protrude into apertures (14) of the disc cam (8) and, when a pivoting end position is reached, lie in a constricted region (14a) of the apertures (14), with the result that the disengaged position of the locking pawl (7) or the locking pawls (7) is fixed in this position.

2. Pivoting fitting according to Claim 1, **characterized in that** the annular gear (6) is configured as a separate component and is connected to the lug (2) such that it cannot rotate.

3. Pivoting fitting according to Claim 1, **characterized in that** the annular gear (6) is integrated into the lug (2), for example produced by a stamping operation or by metal die-casting.

4. Pivoting fitting according to one of the preceding claims, **characterized in that** the locking pawl (7) or the locking pawls (7) is/are loaded by a spring (9), by magnets, gravity or the like in the direction of the internal toothing system.

5. Pivoting fitting according to one of the preceding claims, **characterized in that** the lug (3) which receives the locking pawl (7) or the locking pawls (7) comprises two lug parts which are bent over on the head side, are connected fixedly to one another and are connected to one another in the bent-over region by connecting means, for example two connecting rivets (18) .

6. Pivoting fitting according to Claim 5, **characterized in that** the connecting rivets (18) serve as bearing bolts for the locking pawls (7).

7. Pivoting fitting according to one of the preceding claims, **characterized in that**, in order to disengage the locking pawls (7) from the engagement region to the internal toothing system (11), sections (20) are provided which are untoothed in the region of the annular gear (6).

8. Pivoting fitting according to one of Claims 1 to 6, **characterized in that**, in order to disengage the locking pawls (7) from the engagement region to the internal toothing system (11), bent-over tabs (21) are provided on the disc cam (8).

9. Pivoting fitting according to one of the preceding claims, **characterized in that** the pivoting angle of the disc cam (8) is defined by stop tabs (16) which protrude radially beyond the disc cam (8) and by driver tabs (17) on the annular gear (6) or the lug (2) which interact with the said stop tabs (16).

10. Pivoting fitting according to one of the preceding claims, **characterized in that** the two lugs (2, 3) are connected to one another by a connecting bolt which forms the pivoting axis (4) in the form of a rivet, a screw or the like.

11. Pivoting fitting according to one of the preceding claims, **characterized in that** slots (19) delimit the rotational path of the fitting, in conjunction with bearing journals (12) or connecting rivets (18).

## Revendications

1. Ferrure pivotante (1) avec une première patte (2) et une deuxième patte (3) raccordées entre elles de manière à pouvoir pivoter autour d'un axe (4) commun, et avec un dispositif de blocage (5) intercalé entre les deux pattes (2, 3), lequel comporte une bague dentée (6) à denture intérieure et au moins un rochet (7) à palier oscillant, ledit rochet (7) étant maintenu constamment en contact avec la denture intérieure de la bague dentée (6) depuis une position initiale de la ferrure pivotante (1) jusqu'à un angle de pivotement défini des pattes (2, 3), et chaque position relative occupée par les pattes (2, 3) dans cette plage de pivotement étant assistée de ce fait et le contact avec la denture déclenché après traversée de cette plage de pivotement, ce qui permet un rétro-pivotement non entravé des pattes (2, 3) vers la position initiale, **caractérisée en ce que** la bague dentée (6) est un composant fixe d'une des deux pattes (2) et que le rochet (7) ou les rochets (7) est ou sont fixé(s) sur l'autre patte (3), **en ce qu'**un plateau-came (8) est prévu pour le déclenchement du rochet (7) ou des rochets (7), et **en ce que** le rochet (7) ou les rochets (7) sont munis de cames de commande (15) logées dans des évidements (14) du plateau-came (8) et engagées dans une zone étroite (14a) des évidements (14) lorsqu'une position finale de pivotement est atteinte, de manière à fixer la position déclenchée du rochet (7) ou des rochets (7) dans cette position.

2. Ferrure pivotante selon la revendication 1, **caractérisée en ce que** la bague dentée (6) est réalisée comme composant séparé, et est raccordée à la patte (2) contre laquelle elle est bloquée en rotation.

3. Ferrure pivotante selon la revendication 1, **caractérisée en ce que** la bague dentée (6) est intégrée à la patte (2), par exemple par estampage ou par coulée métallique sous pression.

4. Ferrure pivotante selon l'une des revendications précédentes, **caractérisée en ce que** le rochet (7) ou les rochets (7) est ou sont contraint(s) dans la direction vers la denture intérieure par la force d'un ressort (9), d'aimants, par la force de gravité ou autre.

5. Ferrure pivotante selon l'une des revendications précédentes, **caractérisée en ce que** la patte (3) recevant le rochet (7) ou les rochets (7) se compose de deux pièces de patte à tête coudée fixement raccordées, reliées dans la partie coudée par des moyens d'assemblage tels que deux rivets d'assemblage (18).

6. Ferrure pivotante selon la revendication 5, **caractérisée en ce que** les rivets d'assemblage (18) servent d'axes de palier pour les rochets (7).

7. Ferrure pivotante selon l'une des revendications précédentes, **caractérisée en ce que** des parties non dentées (20) sont prévues sur la bague dentée (6) pour le déclenchement des rochets (7) de la zone d'engrènement avec la denture intérieure (11).

8. Ferrure pivotante selon l'une des revendications 1 à 6, **caractérisée en ce que** des butées en équerre (21) sont prévues sur le plateau-came (8) pour le déclenchement des rochets (7) de la zone d'engrènement avec la denture intérieure (11).

9. Ferrure pivotante selon l'une des revendications précédentes, **caractérisée en ce que** l'angle de pivotement du plateau-came (8) est défini par des ergots de butée (16) saillant radialement sur le plateau-came (8) et par des taquets d'entraînement correspondants (17) sur la bague dentée (6) ou la patte (2).

10. Ferrure pivotante selon l'une des revendications précédentes, **caractérisée en ce que** les deux pattes (2, 3) sont raccordées par un axe d'assemblage représentant l'axe de pivotement (4) sous la forme d'un rivet, d'une vis ou similaire.

11. Ferrure pivotante selon l'une des revendications précédentes, **caractérisée en ce que** des trous oblongs (19) limitent la course de rotation de la ferrure, en association avec des tourillons (12) ou des rivets d'assemblage (18).
